# EUROPÄISCHE PATENTSCHRIFT

(11) **EP 1 952 178 B1**
(45) Veröffentlichungstag und Bekanntmachung des Hinweises auf die Patenterteilung: **06.09.2017**
(21) Anmeldenummer: 06819366.3
(22) Anmeldetag: 09.11.2006
(51) Int. Cl.: G01S 17/32, G01S 7/497

(54) **ENTFERNUNGSMESSGERÄT UND VERFAHREN ZUM BESTIMMEN EINER ENTFERNUNG**
DISTANCE-MEASURING DEVICE AND METHOD FOR DETERMINING A DISTANCE
INSTRUMENT DE MESURE DE DISTANCE ET PROCÉDÉ DE DÉTERMINATION D'UNE DISTANCE

(30) Priorität: 14.11.2005 DE 102005054131
(43) Veröffentlichungstag der Anmeldung: 06.08.2008
(73) Patentinhaber: ROBERT BOSCH GMBH, 70442 Stuttgart (DE)
(72) Erfinder: HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/EP2006/068289
(87) Internationale Veröffentlichungsnummer: WO 2007/054535

(56) Entgegenhaltungen:
- EP-B2- 0 932 835
- DE-A1- 2 229 339
- DE-A1- 10 350 489
- US-A1- 2004 105 087

## Beschreibung

### Stand der Technik

Die Erfindung geht aus von einem Entfernungsmessgerät nach dem Oberbegriff des Anspruchs 1. Die Erfindung bezieht sich weiterhin auf ein Verfahren zum Bestimmen einer Entfernung nach dem Oberbegriff des Anspruchs 7. Es ist aus der EP 0 932 835 B2 ein Entfernungsmessgerät bekannt mit einer Laserdiode zum Erzeugen eines Messsignals und einer Fotodiode zum Empfangen des Messsignals. Zur Kalibrierung des Entfernungsmessgeräts wird das von der Laserdiode erzeugte Messsignal über eine Referenzstrecke umgelenkt und auf eine Referenzdiode gerichtet. Aus einem Vergleich des von einem Messobjekt reflektierten und von der Fotodiode empfangenen Messsignals mit dem direkt von der Referenzdiode empfangenen Messsignal kann eine Entfernungsinformation über das Messobjekt ermittelt werden.

Aus der DE 2229339 A1 ist ein elektrooptischer Entfernungsmesser mit einem Sender eines zur Abgabe verschiedener Messfrequenzen *ω*₁ und *ω*₂, mit *ω*₁ > *ω*₂ modulierbaren Lichtstrahls und mit einem Empfänger zur Aufnahme der von einem Reflektor am Ende der zu messenden Strecke reflektierten Messsignale bekannt, wobei im Empfänger eine Phasenmessschaltung vorgesehen ist, zum Messen der Phasenverschiebung zwischen den Messsignalen und direkt vom Sender an den Empfänger übertragenden Referenzsignalen. Erfindungsgemäß ist in der Vorrichtung der DE 2229339 A1 vorgesehen, dass im Empfänger ein Hilfsoszillator vorgesehen ist, dessen Ausgangssignal dem Messwegsignal und dem Referenzsignal überlagert ist, wobei die Frequenz Ω des Hilfsoszillators der Differenz *ω₁ - ω₂* der beiden Messfrequenzen entspricht, wobei die entstehende Zwischenfrequenz *ω*_{ZF} = *ω*₁ - Ω = *ω*₂ der Phasenmessschaltung zugeführt wird.

Aus der DE 10350489 A1 ist ein optischer Sensor zur Bestimmung von Distanzen von Objekten in einem Überwachungsbereich bekannt, welcher einen Sendelichtstrahlen emittierenden Sender, eine Modulationseinheit, mittels derer die Sendelichtstrahlen amplitudenmoduliert werden, einen Empfänger zum Empfang der als Empfangslichtstahlen von einem Objekt zurückreflektierten Sendelichtstrahlen und eine Auswerteeinheit umfasst. In der Auswerteeinheit wird die Phasenverschiebung der Sendelichtstrahlen und der Empfangslichtstrahlen als Maß für die Objektdistanz bestimmt.

Weitere Entfernungsmessgeräte mit einer Sendeeinheit zum Senden eines hochfrequenten Messsignals, einer Empfangseinheit und einer Auswerteeinheit zum Empfangen bzw. Auswerten des Messsignals sind in EP 0 932 835 B2 oder in US 2004/105087 A1 offenbart.

### Vorteile der Erfindung

Bezüglich des Entfernungsmessgeräts geht die Erfindung aus von einem Entfernungsmessgerät mit einer Sendeeinheit zur Erzeugung eines Sendesignals, welches zumindest eine für eine Erfassung einer Entfernungsinformation gewünschte Messfrequenz aufweist.

Es wird vorgeschlagen, dass die Sendeeinheit ein Mittel zur Erzeugung eines Auswertesignals umfasst, welches eine für eine Auswertung der Entfernungsinformation gewünschte Auswertefrequenz aufweist. Durch eine Erzeugung eines Auswertesignals innerhalb der Sendeeinheit kann das Auswertesignal in besonders enger Verbindung mit dem Sendesignal in seinem erzeugten Zustand stehen. Das Auswertesignal kann z.B. Kenngrößen, beispielsweise eine Frequenz, eine Amplitude, eine Phase, des Sendesignals in seinem erzeugten Zustand aufweisen. Dadurch kann das Auswertesignal vorteilhaft als Referenzsignal verwendet werden. Dabei kann eine Auswertung der Entfernungsinformation durch einen Vergleich des die Entfernungsinformation tragenden Sendesignals, das von einem Messobjekt reflektiert ist und als Empfangssignal von dem Entfernungsmessgerät empfangen wird, mit dem Auswertesignal erfolgen. Insbesondere kann eine Phasenlage des Empfangssignals einfach mit einer Phasenlage des Auswertesignals verglichen werden, wenn das Auswertesignal in fester Beziehung zur Phasenlage des Sendesignals in seinem erzeugten Zustand steht. Alternativ oder zusätzlich kann aus einem Vergleich des Auswertesignals und des Empfangssignals direkt eine Laufzeit des Sendesignals erfasst werden. Die Auswertung der Entfernungsinformation kann außerdem vorteilhaft durchgeführt werden, ohne dass eine weitere Anpassung der Frequenz des Auswertesignals notwendig ist. Wenn das Auswertesignal als Referenzsignal ausgebildet ist, können zusätzlich ein Senden des Referenzsignals über eine Referenzstrecke, dessen Empfangen durch eine Empfangseinheit außerhalb der Sendeeinheit, z.B. durch eine Referenzdiode, sowie eine mögliche elektronische Verarbeitung des Referenzsignals vermieden werden. Dadurch können entsprechende Bauteile und Bauräume vorteilhaft vermieden werden.

Es wird außerdem vorgeschlagen, dass das Mittel als Mischeinheit zum Mischen von Erzeugungssignalen zur Erzeugung des Sendesignals ausgebildet ist. Es kann dadurch einfach ein niederfrequentes Signal bei einer Mischung der Erzeugungssignale erreicht werden, beispielsweise wenn die Erzeugungssignale zwei Frequenzen aufweisen, die um die Frequenz des gewünschten niederfrequenten Signals voneinander verschieden sind. Wenn das Auswertesignal als Mischergebnis einer Mischung der Erzeugungssignale ausgebildet ist, kann eine vorteilhafte enge Verbindung des Auswertesignals mit dem Sendesignal in seinem erzeugten Zustand einfach erreicht werden, wie z.B. eine phasenstarre Kopplung des Auswertesignals an das Sendesignal in seinem erzeugten Zustand. Mehrere Erzeugungssignale, die jeweils zumindest eine Frequenz aufweisen, können in einem elektrischen Signal überlagert werden, das die Erzeugungssignale zu einer Erzeugungsstelle des Sendesignals transportiert. Bei der Mischung können die Erzeugungssignale miteinander multipliziert werden. Alternativ oder zusätzlich können die Erzeugungssignale miteinander addiert werden. Eine Multiplikation der Erzeugungssignale kann z.B. erreicht werden, wenn beim Erzeugen des Sendesignals eine Sendesignalkenngröße, z.B. eine Intensität, eine Frequenz und/oder eine Phase, von den Erzeugungssignalen bezüglich einer Kennlinie moduliert wird und die Erzeugungssignale an einer Nichtlinearität der Kennlinie gemischt werden.

In diesem Zusammenhang wird ferner vorgeschlagen, dass die Sendeeinheit ein Sendemittel zum Senden des Sendesignals aufweist und das Sendemittel als Mischeinheit ausgebildet ist. Es können dadurch zusätzliche elektronische Komponenten zum Mischen der Erzeugungssignale und ein entsprechender Bauraum vermieden werden. Das Sendemittel kann vorzugsweise zum Senden eines sichtbaren Lichtstrahls vorgesehen sein. Insbesondere kann das Sendemittel als Laserdiode ausgeführt sein. Alternativ ist eine Ausbildung des Sendemittels für ein Senden weiterer elektromagnetischer Strahlungen, wie z.B. Infrarot-, Radarstrahlungen usw., oder für ein Senden von UltraschallWellen denkbar. Dabei können die Erzeugungssignale als Modulationssignale zum Modulieren einer von dem Sendemittel emittierten Strahlung ausgebildet sein.

In einer weiteren Ausführungsvariante weist das Entfernungsmessgerät eine Phasenkopplungseinheit auf, die dazu vorgesehen ist, das Auswertesignal mit einem Referenzsignal durch eine Regelung der Erzeugungssignale phasenstarr zu koppeln. Es kann durch die Kopplung des Auswertesignals an einem Referenzsignal ein besonders stabiles Auswertesignal erreicht werden. Zusätzlich kann durch die Regelung der Erzeugungssignale eine phasenstarre Verbindung des Sendesignals mit dem Referenzsignal erzielt werden. Dabei ist das Referenzsignal z.B. in seiner Frequenz und seiner Phasenlage vorteilhafterweise vorgegeben, wodurch eine Auswertung der Entfernungsinformation durch einen Vergleich eines die Entfernungsinformation tragenden Empfangssignals mit dem Referenzsignal durchgeführt werden kann. Die Phasenkopplungseinheit kann vorteilhafterweise von einer PLL-Schaltung ausgebildet sein, auf die das Auswertesignal und das Referenzsignal gegeben werden. Einem Ausgang der PLL-Schaltung kann vorzugsweise eine VCO-Schaltung zur Erzeugung der Erzeugungssignale nachgeschaltet werden, die abhängig von einer Phasendifferenz zwischen dem Referenzsignal und dem Auswertesignal Frequenzen der Erzeugungssignale regelt. Eine PLL-Schaltung ("Phase Locked Loop" oder "Phasenbegrenzungskreis") sowie eine VCO-Schaltung ("Voltage Controlled Oszillator" oder "Spannungsfrequenzumsetzer") sind in der Elektronik hinreichend bekannt. Eine PLL-Schaltung vergleicht die Phasenlage zweier Signale und gibt eine von der Phasenlage abhängige Spannung aus. Eine VCO-Schaltung erzeugt ein Signal mit einer Frequenz, die von der in die VCO-Schaltung eingegebenen Spannung abhängig ist. Durch die Kombination einer PLL-Schaltung mit einer VCO-Schaltung ist somit eine Schaltungsvorrichtung erreichbar, mit der eine von der VCO-Schaltung erzeugte Ausgangsfrequenz mit hoher Genauigkeit an eine Grundfrequenz angeglichen werden kann.

Vorteilhafterweise ist das Auswertesignal ein niederfrequentes Signal. Dadurch können kostengünstige elektronische Komponenten für die Auswertung der Entfernungsinformation mittels des Auswertesignals und/oder für ein Erzeugen, z.B. ein Erfassen, des Auswertesignals in der Sendeeinheit eingesetzt werden. Ein die Entfernungsinformation tragendes Empfangssignal, das vorzugsweise ein hochfrequentes Signal ist, wird z.B. nach seinem Empfangen durch das Entfernungsmessgerät vorteilhafterweise selbst in ein niederfrequentes Signal umgewandelt. Das Auswertesignal kann zur Auswertung der Entfernungsinformation dann direkt mit dem niederfrequenten Signal verglichen werden. Unter einem "niederfrequenten Signal" soll in diesem Zusammenhang ein Signal verstanden werden, das eine Frequenz in einem Frequenzbereich aufweist, der eine elektronische Verarbeitung des Signals durch bestehende elektronische Komponenten erlaubt. Insbesondere sollen Signale verstanden werden, die eine Frequenz zwischen 500 Hz und 100 kHz aufweisen. Ferner soll unter einem "hochfrequenten Signal" insbesondere ein Signal verstanden werden, das eine Frequenz zwischen 500 kHz und 1GHz aufweist.

Eine weitere Ausgestaltung er Erfindung sieht vor, dass die Sendeeinheit ein Sendemittel zum Senden des Sendesignals und eine Monitoreinheit zum Kontrollieren des Sendemittels umfasst und die Monitoreinheit als Empfangseinheit zum Empfangen des Auswertesignals ausgebildet ist. Hierdurch kann auf ein zusätzliches Empfangsmittel, z.B. eine Photodiode, zum Empfang des Auswertesignals verzichtet werden. Wenn das Auswertesignal durch ein Mischen in dem Sendemittel erzeugt wird und von dem Sendemittel zumindest temporär mit dem Sendesignal gesendet wird, kann das Auswertesignal nach einer kurzen Strecke innerhalb der Sendeeinheit erfasst werden. Hierzu kann die Monitoreinheit von einer Monitordiode, die zum Kontrollieren einer von dem Sendemittel erzeugten Strahlung vorgesehen ist, ausgebildet sein.

Ein die Entfernungsinformation tragendes Empfangssignal, das vorzugsweise ein hochfrequentes Signal ist, wird vorteilhafterweise nach seinem Empfangen durch das Entfernungsmessgerät selbst in ein nierderfrequentes Signal mit der Auswertefrequenz umwandelt, um die Auswertung der Entfernungsinformation, z.B. durch einen Vergleich mit dem Auswertesignal, durchzuführen. Das vom Sendemittel erzeugte Sendesignal kann selbst eine niederfrequente Komponente mit der Auswertefrequenz aufweisen, wenn das Auswertesignal bei einem Mischen im Sendemittel selbst vom Sendemittel gesendet wird. Daher enthält das auf einem Messobjekt reflektierte und als Empfangssignal empfangene Sendesignal auch die niederfrequente Komponente mit der Auswertefrequenz. Dadurch kann eine unerwünschte Überlagerung des niederfrequenten Signals mit dieser niederfrequenten Komponente stattfinden, da beide die Auswertefrequenz aufweisen. Es kann eine Unterdrückung der niederfrequenten Komponente bei dem Senden des Sendesignals vorteilhaft erreicht werden, wenn die Sendeeinheit ein Sendemittel zum Senden des Sendesignals und eine Steuereinheit zum Steuern des Sendemittels aufweist, die dazu vorgesehen ist, einem Senden des Sendesignals mit der Auswertefrequenz entgegenzusteuern.

In diesem Zusammenhang wird außerdem vorgeschlagen, dass das Entfernungsmessgerät eine elektrische Verbindung zwischen der Steuereinheit und dem Sendemittel umfasst, die eine Erfassungsstelle zum Erfassen des Auswertesignals aufweist. Wenn die niederfrequente Komponente mit der Auswertefrequenz im Sendesignal durch eine angepasste Steuerung des Sendemittels unterdrückt wird, kann ein entsprechendes Steuersignal mit der Auswertefrequenz vorteilhaft als Auswertesignal an der Erfassungsstelle erfasst werden.

Bezüglich des Verfahrens geht die Erfindung aus von einem Verfahren zum Bestimmen einer Entfernung mittels eines Sendesignals, bei dem das Sendesignal von einem Sendemittel gesendet wird und das Sendesignal mittels zweier Erzeugungssignale erzeugt wird. Es wird vorgeschlagen, dass die Erzeugungssignale gemischt werden und durch das Mischen ein Auswertesignal erzeugt wird. Hierdurch steht das Auswertesignal in einer besonders engen Verbindung mit dem Sendesignal in einem erzeugten Zustand. Wenn das Auswertesignal als Referenzsignal ausgebildet ist, können zusätzlich ein Senden des Referenzsignals über eine Referenzstrecke, dessen Empfangen durch eine Empfangseinheit außerhalb der Sendeeinheit, z.B. durch eine Referenzdiode, sowie eine mögliche elektronische Verarbeitung des Referenzsignals vermieden werden. Dadurch können entsprechende Bauteile und Bauräume vorteilhaft vermieden werden. Es kann einfach ein niederfrequentes Signal bei einer Mischung der Erzeugungssignale erreicht werden, beispielsweise wenn die Erzeugungssignale zwei Frequenzen aufweisen, die um die Frequenz des gewünschten niederfrequenten Signals voneinander verschieden sind. Die Erzeugungssignale können als Modulationssignale zum Modulieren einer vom Sendemittel gesendeten Strahlung ausgebildet sein. Bei der Mischung können die Erzeugungssignale miteinander multipliziert werden. Alternativ oder zusätzlich können die Erzeugungssignale miteinander addiert werden. Eine Multiplikation der Erzeugungssignale kann z.B. erreicht werden, wenn beim Erzeugen des Sendesignals eine Sendesignalkenngröße, z.B. eine Intensität, eine Frequenz und/oder eine Phase, von den Erzeugungssignalen bezüglich einer Kennlinie moduliert wird und die Erzeugungssignale an einer Nichtlinearität der Kennlinie gemischt werden. Die Erzeugungssignale werden vorteilhafterweise auf einen Eingang des Sendemittels gegeben und das Mischen kann im Sendemittel selbst durchgeführt werden.

Es wird außerdem vorgeschlagen, dass das Auswertesignal zumindest temporär von dem Sendemittel gesendet wird und von einer Monitoreinheit zum Kontrollieren des Sendemittels empfangen wird. Es kann eine Phasenverschiebung zwischen dem Auswertesignal und dem Sendesignal bei einer Erzeugung des Sendesignals im Sendemittel vorteilhaft ausgeglichen werden, da das Auswertesignal und das Sendesignal zusammen vom Sendemittel gesendet werden. Durch die Verwendung der Monitoreinheit zum Empfangen des Auswertesignals kann ein zusätzliches Empfangsmittel vermieden werden.

In einer Ausführungsvariante wird das Auswertesignal als Steuersignal zum Steuern des Sendemittels auf das Sendemittel gegeben. Dadurch kann ein Unterdrücken eines Sendens des Auswertesignals durch das Sendemittel erreicht werden. Es kann insbesondere eine für eine Auswertung einer Entfernungsinformation störende Komponente mit einer Frequenz des Auswertesignals im Sendesignal vorteilhaft unterdrückt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Entfernungsmessgerät mit einer Sendeeinheit, einer Empfangseinheit und einer Recheneinheit,
- Fig. 2: ein Schaltung des Entfernungsmessgeräts aus Figur 1 mit der Sendeeinheit, der Empfangseinheit, der Recheneinheit und einem Mittel zum Erzeugen eines Auswertesignals und
- Fig. 3: eine alternative Schaltung des Entfernungsmessgeräts aus Figur 1, mit einer Phasenkopplungseinheit.

### Beschreibung der Ausführungsbeispiele

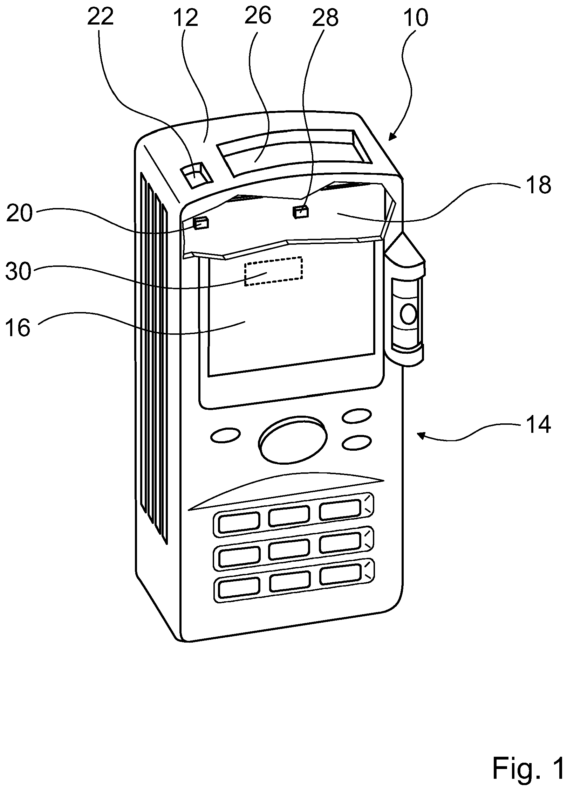

Figur 1 zeigt ein als Laserentfernungsmessgerät 10 ausgeführtes Entfernungsmessgerät. Jedes Signal, das nicht ständig auf einem Gleichspannungswert verharrt, wird im Folgenden als mit einer Frequenz f behaftet angesehen. Das Signal kann hierbei sinusförmig, rechteckig, impulsförmig, gaußförmig usw. oder nur für eine begrenzte Zeit sinusförmig, rechteckig, impulsförmig, gaußförmig usw. sein. Natürlich sind weitere zeitliche Verläufe des Signals denkbar. Es können neben der Grundschwingungsfrequenz f noch weitere Frequenzen, nämlich so genannte Oberschwingungen, auftreten. Die Theorie hierzu ist aus der Mathematik bekannt und soll hier nicht näher erläutert werden.

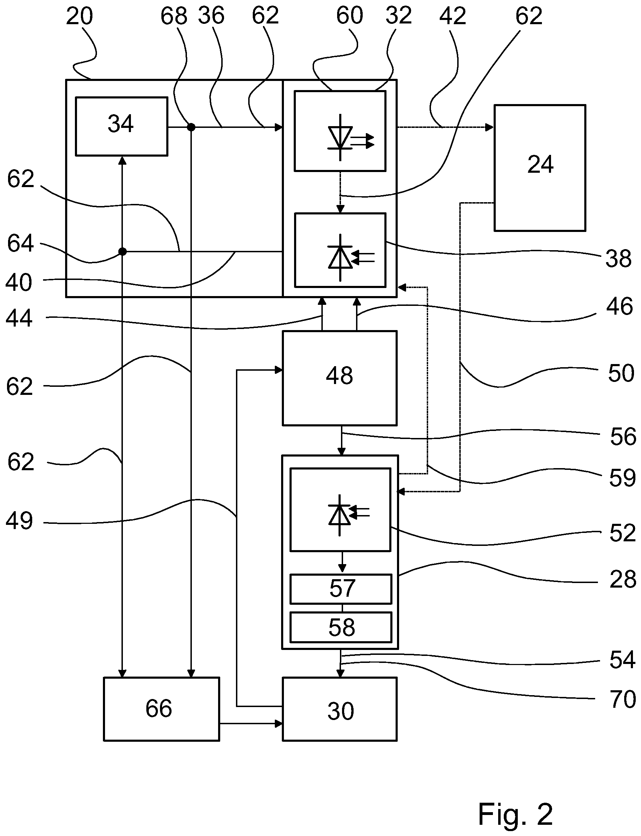

Das Laserentfernungsmessgerät 10 weist ein Gehäuse 12, Betätigungselemente 14 zum Ein- und Ausschalten des Laserentfernungsmessgeräts 10 und zum Starten bzw. Konfigurieren eines Messvorgangs sowie ein Display 16 auf. Auf einem Trägerelement 18 innerhalb des Gehäuses 12 ist eine Sendeeinheit 20 zur Erzeugung eines Lichtstrahls, der im Betrieb des Laserentfernungsmessgeräts 10 über eine Sendeoptik 22 gesendet wird. Der von einer Oberfläche eines entfernten Messobjekts 24 (Figur 2) reflektierte Lichtstrahl wird über eine Empfangsoptik 26 von einer Empfangseinheit 28 empfangen. Aus einem Phasenvergleich zwischen dem gesendeten Lichtstrahl und dem empfangenen Lichtstrahl in einer Recheneinheit 30 kann eine Lichtlaufzeit ermittelt und über die Lichtgeschwindigkeit der gesuchte Abstand bestimmt werden.

Figur 2 zeigt in einer schematischen Darstellung eine interne Schaltung des Laserentfernungsmessgeräts 10, in der die Sendeeinheit 20, die Empfangseinheit 28 und die Recheneinheit 30 zu erkennen sind.

Zur Erzeugung des Lichtstrahls ist die Sendeeinheit 20 mit einem als Laserdiode ausgebildeten Sendemittel 32 versehen. Im Betrieb des Laserentfernungsmessgeräts 10 ist dieses von einer Steuereinheit 34 gesteuert, die mit dem Sendemittel 32 über eine elektrische Verbindung 36 verbunden ist. Durch die Steuereinheit 34 können bestimmte Amplituden im Frequenzspektrum des Lichtstrahls für bestimmte Anwendungen angepasst werden. Beispielsweise können bestimmte Frequenzen im Frequenzspektrum von der Steuereinheit 34 verstärkt oder unterdrückt werden. Zum Kontrollieren eines von dem Sendemittel 32 gesendeten Lichtstrahls ist die Sendeeinheit 20 außerdem mit einer als Monitordiode ausgebildeten Monitoreinheit 38 versehen, die wiederum mit der Steuereinheit 34 über eine elektrische Verbindung 40 verbunden ist. Weicht ein von dem Sendemittel 32 gesendeter Lichtstrahl von einer für eine Anwendung gewünschten Form ab, kann die Steuereinheit 34 entsprechende Änderungen des Lichtstrahls vornehmen.

Der von dem Sendemittel 32 gesendete Lichtstrahl ist selbst von einem Sendesignal 42 amplitudenmoduliert. Zur Erzeugung des Sendesignals 42 werden zwei Erzeugungssignale 44, 46 auf das Sendemittel 32 gegeben, das im betrachteten Ausführungsbeispiel und wie in der nachfolgenden Beschreibung erläutert als Mischeinheit ausgebildet ist. Die Erzeugungssignale 44, 46 werden von einer Oszillatoreinheit 48 ausgegeben und weisen Messfrequenzen f₁ und f₂ auf. Die Oszillatoreinheit 48 weist einen Oszillator zum Herstellen der Erzeugungssignale 44, 46 sowie eines weiteren Mischsignals 56 (siehe unten) und eine Ansteuerschaltung zum Steuern der Modulation auf. Diese internen Komponenten sind nicht gezeigt. Das Sendemittel 32 steht dabei unter einer elektrischen Eingangsspannung V, die von der Summe zweier Spannungen V₁ und V₂ gebildet ist, welche die Messfrequenzen f₁ und f₂ aufweisen. Als Funktion der Eingangsspannung V weist eine Intensität I des emittierten Lichtstrahls im Sendemittel 32 eine nichtlineare Kennlinie auf, die hier der Übersichtlichkeit halber durch einen quadratischen Verlauf I(V) = I₀ + I₁ V + I₂ V² angenähert wird. Wird die Eingangsspannung V durch die Summe der Spannungen V₁ und V₂ ersetzt, wird die Intensität I durch Signale der Messfrequenzen f₁, f₂ und Frequenzen, die aus einer Multiplikation der Erzeugungssignale 44, 46 entstehen, moduliert. Diese Multiplikation der Erzeugungssignale 44, 46 ergibt sich aus dem quadratischen Term in der Kennlinie. Insbesondere wird eine Frequenz f_{A} = f₁ - f₂ durch die Multiplikation der Erzeugungssignale 44, 46 im Sendemittel 32 erzeugt und im Lichtstrahl gesendet. Die Messfrequenzen f₁ und f₂ sind beide Hochfrequenzen. Die Oszillatoreinheit 48 wird über eine elektrische Verbindung 49 von der Recheneinheit 30 gesteuert.

Der vom Messobjekt 24 reflektierte Lichtstrahl ist natürlich ebenfalls von einem hochfrequenten Signal der Messfrequenzen f₁ und f₂ moduliert, das als Empfangssignal 50 bezeichnet wird. Das Empfangssignal 50 weist bei dem Empfangen des Lichtstrahls im Vergleich zum Sendesignal 42 in seinem erzeugten Zustand eine Phasenverschiebung auf, die proportional zur Laufzeit des Lichtstrahls von seiner Erzeugung bis zu seinem Empfang ist. Das Empfangssignal 50 wird von einer Fotodiode 52 der Empfangseinheit 28 empfangen. Zu einer elektronischen Analyse der Phasenlage des Empfangssignals 50 wird aus dem hochfrequenten Empfangssignal 50 ein Signal 54 erzeugt, das eine für die elektronische Analyse der Phasenverschiebung angepasste Niederfrequenz aufweist. Hierzu wird das Empfangssignal 50 mit einem Mischsignal 56 einer Mischfrequenz f₃ gemischt, das von der Oszillatoreinheit 48 ausgegeben wird. Die Oszillatoreinheit 48 umfasst eine in der Figur nicht gezeigte Phasenkopplungseinheit, welche die Erzeugungssignale 44, 46 miteinander und mit dem Mischsignal 56 phasenstarr koppelt. Die Mischung erfolgt in der Empfangseinheit 28. Im betrachteten Ausführungsbeispiel erfolgt die Mischung in der Fotodiode 52, die als Avalanche-Fotodiode ausgebildet ist. Der Aufbau und die Wirkungsweise einer derartigen Avalanche-Fotodiode sind bekannt, so dass im Rahmen der vorliegenden Beschreibung hierauf nicht näher eingegangen werden soll. Alternativ kann die Mischung in der Empfangseinheit 28 außerhalb der Fotodiode 52, z.B. in einer Mischeinheit der Empfangseinheit 28, erfolgen. Ein aus der Mischung erzeugtes niederfrequentes Signal, das die Frequenz f₁ - f₃ aufweist, wird auf einen NF-Filter 57 (Niederfrequenz-Filter) und einen Verstärker 58 der Empfangseinheit 28 gegeben und verlässt die Empfangseinheit 28 als niederfrequentes Signal 54. Dieses wird anschließend in die Recheneinheit 30 zur Analyse seiner Phasenlage eingegeben. Optional kann das Mischsignal 56 innerhalb der Empfangseinheit 28 erfasst werden und über eine elektrische Verbindung 59 auf die Sendeeinheit 20 gegeben werden. Das Mischsignal 56 kann z.B. direkt in das Sendemittel 32 eingekoppelt werden. Dadurch kann ein Ausgleich einer bei der Mischung des Mischsignals 56 mit dem Empfangssignal 50 entstehenden unbekannten Phasenverschiebung erzielt werden.

Die Oszillatoreinheit 48 umfasst eine in der Figur nicht gezeigte Phasenkopplungseinheit, welche die Erzeugungssignale 44, 46 miteinander und mit dem Mischsignal 56 phasenstarr koppelt.

Um aus der Phasenlage des niederfrequenten Signals 54 die zur Lichtlaufzeit proportionale Phasenverschiebung ermitteln zu können, soll in die Recheneinheit 30 ein weiteres Signal eingegeben werden, das mit dem Sendesignal 42 in seinem erzeugten Zustand phasenstarr gekoppelt ist. Hierzu ist im betrachteten Ausführungsbeispiel, wie in der nachfolgenden Beschreibung erläutert, das Sendemittel 32 als ein Mittel 60 zur Erzeugung eines Auswertesignals 62 ausgeführt. Dafür wird das Signal der Frequenz f_{A} = f₁ - f₂, das bei der Mischung der Erzeugungssignale 44, 46 im als Mischeinheit ausgebildeten Sendemittel 32 erzeugt wird, als Auswertesignal 62 verwendet, wobei die Frequenz f_{A} = f₁ - f₂ als Auswertefrequenz f_{A} bezeichnet wird. Die Messfrequenzen f₁ und f₂ sind erfindungsgemäß so gewählt, dass das Auswertesignal 62 eine für eine Analyse der Phasenlage des niederfrequenten Signals 54 angepasste Auswertefrequenz f_{A} aufweist. Im betrachteten Ausführungsbeispiel sind die Messfrequenzen f₁ und f₂ so gewählt, dass das Auswertesignal 62 ein niederfrequentes Signal ist. Hierzu sind die Frequenzen f₁ und f₂ um eine kleine Frequenz voneinander verschieden. Ferner ist das Auswertesignal 62 in fester Beziehung mit dem Sendesignal 42 in seinem erzeugten Zustand, da es zusammen mit diesem im Sendemittel 32 erzeugt wird. Das Auswertesignal 62 wird von der Monitoreinheit 38 empfangen und in ein elektrisches Signal umwandelt. Das Auswertesignal 62 wird in elektrischer Form an einer Erfassungsstelle 64 der elektrischen Verbindung 40 erfasst, in einer elektronischen Verarbeitungseinheit 66 verarbeitet und in die Recheneinheit 30 zur Auswertung der gesuchten Phasenverschiebung eingegeben. Alternativ oder zusätzlich wird das Auswertesignal 62 in elektrischer Form an einer Erfassungsstelle 68 der elektrischen Verbindung 36 erfasst.

Da das Auswertesignal 62 nach seinem gemeinsamen Senden mit dem Sendesignal 42 durch die Monitoreinheit 38 empfangen wird, wird eine unerwünschte Phasenverschiebung zwischen dem Sendesignal 42 und dem Auswertesignal 62, die bei der Erzeugung des Sendesignals 42 im Sendemittel 32 entsteht, ausgeglichen. Diese unerwünschte Phasenverschiebung, die eine unbekannte Signallaufzeitverzögerung verursachen kann, hängt insbesondere von Umgebungsbedingungen der Sendeeinheit 20 ab, wie z.B. Arbeitstemperatur, Feuchtigkeit usw. Dieser Einfluss von Umgebungsbedingungen kann insbesondere mit einem Alterungszustand der Sendeeinheit 20 zusammenhängen. Aufgrund der kleinen Frequenz f_{A} kann eine weitere Phasenverschiebung bei dem Empfangen des Auswertesignals 62 in der Monitoreinheit 38 vernachlässigt werden, so dass das Auswertesignal 62 an der Erfassungsstelle 64 im Wesentlichen in Phase mit dem Sendesignal 42 in seinem erzeugten Zustand ist.

In diesem Zusammenhang kann bei dem Mischen des Empfangssignals 50 mit dem Mischsignal 56 in der als Fotodiode ausgebildeten Empfangseinheit 28 ebenfalls eine unbekannte Phasenverschiebung des niederfrequenten Signals 54 entstehen. Um diese Phasenverschiebung auszugleichen, werden zwei Phasenanalysen durchgeführt, erstens von dem niederfrequenten Signal 54 der Frequenz f₁ - f₃ und zweitens von einem weiteren niederfrequenten Signal 70 der Frequenz f₂ - f₃, das sich ebenfalls aus der Mischung des Empfangssignals 50 mit dem Mischsignal 56 ergibt. Dadurch kann die unbekannte Phasenverschiebung eliminiert werden. Diese Phasenanalysen können gleichzeitig oder zeitlich nacheinander erfolgen.

In einer Ausführungsvariante wird das Empfangssignal 50 mit einem der Erzeugungssignale 44, 46 gemischt, wobei z.B. f₃ = f₂ ist. In diesem Fall weist das niederfrequente Signal 54, das aus der Mischung des Empfangssignals 50 mit dem Mischsignal 56 der Frequenz f₂ erzeugt wird, die Auswertefrequenz f_{A} = f₁ - f₂ auf. Das Empfangssignal 50 weist, wie das Sendesignal 42, eine niederfrequente Komponente mit der Auswertefrequenz f_{A} auf, da das Auswertesignal 62 zusammen mit dem Sendesignal 42 im Lichtstrahl gesendet wird. Um eine unerwünschte Überlagerung der niederfrequenten Komponente der Auswertefrequenz f_{A} des Empfangssignals 50 mit dem niederfrequenten Signal 54 zu vermeiden, wird im betrachteten Ausführungsbeispiel das Senden der niederfrequenten Komponente mit der Auswertefrequenz f_{A} unterdrückt. Dies erfolgt durch die Steuereinheit 34, die das Sendemittel 32 so regelt, dass diese unerwünschte Auswertefrequenz f_{A} im Lichtstrahl entgegengekoppelt wird. Hierzu wird das Auswertesignal 62 als Steuersignal zum Entgegensteuern der unerwünschten Auswertefrequenz f_{A} negativ auf das Sendemittel 32 gegeben. Das Auswertesignal 62 kann daher weiter an der Erfassungsstelle 68 in elektrischer Form erfasst werden.

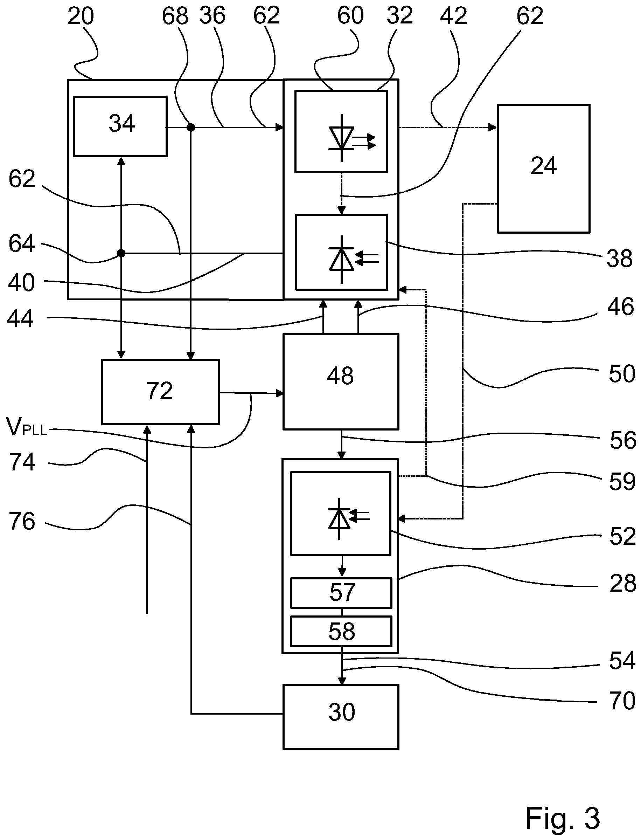

Figur 3 zeigt eine alternative Ausführungsform der Schaltung des Laserentfernungsmessgeräts 10. Diese weist eine Phasenkopplungseinheit 72 auf, die von einer PLL-Schaltung ausgebildet ist. Diese umfasst einen nicht gezeigten Phasenkomparator, durch welchen die Phasenlage des Auswertesignals 62 mit der Phasenlage eines auf die PLL-Schaltung gegebenen Referenzsignals 74 verglichen wird, und ist über eine elektrische Verbindung 76 von der Recheneinheit 30 gesteuert. Die PLL-Schaltung erzeugt eine elektrische Spannung V_{PLL}, die von einem Phasenunterschied zwischen dem Referenzsignal 74 und dem Auswertesignal 62 abhängig ist. Diese Spannung V_{PLL} steuert eine in der Figur nicht gezeigte VCO-Schaltung, welche die Erzeugungssignale 44, 46 und das Mischsignal 56 erzeugt. Mit Hilfe der PLL-Schaltung und der VCO-Schaltung werden durch eine Regelung der Erzeugungssignale 44, 46 das Auswertesignal 62 und das Sendesignal 42 phasenstarr und mit einer bekannten Phasenlage zueinander mit dem Referenzsignal 74 gekoppelt. Mit dem Referenzsignal 74, das von einem nicht gezeigten Oszillator erzeugt wird und dessen Phasenlage bekannt ist, kann aus einer Phasenanalyse des niederfrequenten Signals 54 die Phasenverschiebung des Empfangssignals 50 und anschließend der gesuchte Abstand zum Messobjekt 24 ermittelt werden. Das Referenzsignal 74 kann alternativ von der Recheneinheit 30 generiert werden.

**Bezugszeichen**

| | | | |
|---|---|---|---|
| 10 | Laserentfernungsmessgerät | 54 | Signal |
| | | 56 | Mischsignal |
| 12 | Gehäuse | 57 | NF-Filter |
| 14 | Betätigungselement | 58 | Verstärker |
| 16 | Display | 59 | elektrische Verbindung |
| 18 | Trägerelement | 60 | Mittel |
| 20 | Sendeeinheit | 62 | Auswertesignal |
| 22 | Sendeoptik | 64 | Erfassungsstelle |
| 24 | Messobjekt | 66 | Verarbeitungseinheit |
| 26 | Empfangsoptik | 68 | Erfassungsstelle |
| 28 | Empfangseinheit | 70 | Signal |
| 30 | Recheneinheit | 72 | Phasenkopplungseinheit |
| 32 | Sendemittel | 74 | Referenzsignal |
| 34 | Steuereinheit | 76 | Verbindung |
| 36 | elektrische Verbindung | f₁ | Messfrequenz |
| 38 | Monitoreinheit | f₂ | Messfrequenz |
| 40 | elektrische Verbindung | f_{A} | Auswertefrequenz |
| 42 | Sendesignal | f₃ | Mischfrequenz |
| 44 | Erzeugungssignal | V | Eingangsspannung |
| 46 | Erzeugungssignal | V₁ | Spannung |
| 48 | Oszillatoreinheit | V₂ | Spannung |
| 49 | Verbindung | V_{PLL} | Spannung |
| 50 | Empfangssignal | I | Intensität |
| 52 | Fotodiode | | |

## Patentansprüche

1. Entfernungsmessgerät mit einer Sendeeinheit (20) zur Erzeugung eines als Lichtstrahl ausgebildeten Sendesignals (42) zur Bestimmung einer Entfernung aus einem Phasenvergleich zwischen einem gesendeten Lichtstrahl und einem als Empfangssignal (50) mittels einer Empfangseinheit (28) von einer Oberfläche eines entfernten Messobjekts (24) empfangenen reflektierten Lichtstrahl, wobei das Empfangssignal (50) im Vergleich zum Sendesignal (42) in seinem erzeugten Zustand eine zur Laufzeit des Lichtstrahls von seiner Erzeugung bis zu seinem Empfang proportionale Phasenverschiebung aufweist, aufweisend ein Sendemittel (32) zum Senden des Sendesignals (42), wobei das Sendesignal (42) zumindest eine für eine Erfassung einer Entfernungsinformation gewünschte Messfrequenz (f₁, f₂) aufweist, wobei die Sendeeinheit (20) ein Mittel (60) zur Erzeugung eines Auswertesignals (62) umfasst, wobei das Auswertesignal (62) eine für eine Auswertung der Entfernungsinformation gewünschte Auswertefrequenz (f_{A}) aufweist, **dadurch gekennzeichnet, dass** das Sendemittel (32) als das als Mischeinheit dienende Mittel (60) zum Mischen von Erzeugungssignalen (44, 46) zur Erzeugung des Sendesignals (42) ausgebildet ist, wobei die Erzeugungssignale (44, 46) zwei Frequenzen (f₁, f₂) aufweisen, die um die gewünschte Auswertefrequenz (f_{A}) voneinander verschieden sind.

2. Entfernungsmessgerät nach Anspruch 1, **gekennzeichnet durch** eine Phasenkopplungseinheit (72), die dazu vorgesehen ist, das Auswertesignal (62) mit einem Referenzsignal (74) durch eine Regelung der Erzeugungssignale (44, 46) phasenstarr zu koppeln.

3. Entfernungsmessgerät nach einem der vorhergehenden Ansprüche, **dadurch gekennzeichnet, dass** das Auswertesignal (62) ein niederfrequentes Signal ist.

4. Entfernungsmessgerät nach einem der vorhergehenden Ansprüche, **dadurch gekennzeichnet, dass** die Sendeeinheit (20) ein Sendemittel (32) zum Senden des Sendesignals (42) und eine Monitoreinheit (38) zum Kontrollieren des Sendemittels (32) umfasst und die Monitoreinheit (38) als Empfangseinheit zum Empfangen des Auswertesignals (62) ausgebildet ist.

5. Entfernungsmessgerät nach einem der vorhergehenden Ansprüche, **dadurch gekennzeichnet, dass** die Sendeeinheit (20) ein Sendemittel (32) zum Senden des Sendesignals (42) und eine Steuereinheit (34) zum Steuern des Sendemittels (32) aufweist, die dazu vorgesehen ist, einem Senden des Sendesignals (42) mit der Auswertefrequenz (fA) entgegenzusteuern.

6. Entfernungsmessgerät nach Anspruch 5, **gekennzeichnet durch** eine elektrische Verbindung (36) zwischen der Steuereinheit (34) und dem Sendemittel (32), die eine Erfassungsstelle (68) zum Erfassen des Auswertesignals (62) aufweist.

7. Verfahren zum Bestimmen einer Entfernung mittels eines als Lichtstrahl ausgebildeten Sendesignals (42) aus einem Phasenvergleich zwischen einem gesendeten Lichtstrahl und einem als Empfangssignal (50) mittels einer Empfangseinheit (28) von einer Oberfläche eines entfernten Messobjekts (24) empfangenen reflektierten Lichtstrahl, wobei das Empfangssignal (50) im Vergleich zum Sendesignal (42) in seinem erzeugten Zustand eine zur Laufzeit des Lichtstrahls von seiner Erzeugung bis zu seinem Empfang proportionale Phasenverschiebung aufweist, wobei ferner das Sendesignal (42) von einem Sendemittel (32) gesendet wird und das Sendesignal (42) mittels zweier Erzeugungssignale (44, 46) erzeugt wird und zumindest eine für eine Erfassung einer Entfernungsinformation gewünschte Messfrequenz (f₁, f₂) aufweist,
**dadurch gekennzeichnet, dass** die Erzeugungssignale (44, 46) mittels dem als Mischeinheit dienenden Sendemittel (32) gemischt werden und durch das Mischen ein Auswertesignal (62) erzeugt wird, wobei das Auswertesignal (62) eine für die Auswertung der Entfernungsinformation gewünschte Auswertefrequenz (f_{A}) aufweist, wobei die Erzeugungssignale (44, 46) zwei Frequenzen (f₁,f₂) aufweisen, die um die gewünschte Auswertefrequenz (f_{A}) voneinander verschieden sind.

8. Verfahren nach Anspruch 7, **dadurch gekennzeichnet, dass** das Auswertesignal (62) zumindest temporär von dem Sendemittel (32) gesendet wird und von einer Monitoreinheit (38) zum Kontrollieren des Sendemittels (32) empfangen wird.

9. Verfahren nach Anspruch 7 oder 8, **dadurch gekennzeichnet, dass** das Auswertesignal (62) als Steuersignal zum Steuern des Sendemittels (32) auf das Sendemittel (32) gegeben wird.

## Claims

1. Distance measuring device having a transmitting unit (20) for generating a transmission signal (42) in the form of a light beam for determining a distance from a phase comparison between a transmitted light beam and a reflected light beam received from a surface of a remote measurement object (24) as a reception signal (50) by means of a receiving unit (28),
the reception signal (50), in comparison with the transmission signal (42) in its generated state, having a phase shift proportional to the propagation time of the light beam from its generation to its reception,
having a transmission means (32) for transmitting the transmission signal (42), the transmission signal (42) having at least one measurement frequency (f₁, f₂) desired for acquiring an item of distance information,
the transmitting unit (20) comprising a means (60) for generating an evaluation signal (62), the evaluation signal (62) having an evaluation frequency (f_{A}) desired for evaluating the distance information,
**characterized in that**
the transmission means (32), as the means (60) used as the mixing unit, is designed to mix generation signals (44, 46) for generating the transmission signal (42), the generation signals (44, 46) having two frequencies (f₁, f₂) which differ from one another by the desired evaluation frequency (f_{A}).

2. Distance measuring device according to Claim 1,
**characterized by** a phase coupling unit (72) which is intended to couple the evaluation signal (62) to a reference signal (74) in a phase-locked manner by controlling the generation signals (44, 46).

3. Distance measuring device according to one of the preceding claims, **characterized in that** the evaluation signal (62) is a low-frequency signal.

4. Distance measuring device according to one of the preceding claims, **characterized in that** the transmitting unit (20) comprises a transmission means (32) for transmitting the transmission signal (42) and a monitoring unit (38) for monitoring the transmission means (32), and the monitoring unit (38) is in the form of a receiving unit for receiving the evaluation signal (62).

5. Distance measuring device according to one of the preceding claims, **characterized in that** the transmitting unit (20) has a transmission means (32) for transmitting the transmission signal (42) and a control unit (34) for controlling the transmission means (32), which control unit is intended to counteract transmission of the transmission signal (42) at the evaluation frequency (fA).

6. Distance measuring device according to Claim 5,
**characterized by** an electrical connection (36) between the control unit (34) and the transmission means (32), which electrical connection has an acquisition point (68) for acquiring the evaluation signal (62).

7. Method for determining a distance by means of a transmission signal (42) in the form of a light beam from a phase comparison between a transmitted light beam and a reflected light beam received from a surface of a remote measurement object (24) as a reception signal (50) by means of a receiving unit (28),
the reception signal (50), in comparison with the transmission signal (42) in its generated state, having a phase shift proportional to the propagation time of the light beam from its generation to its reception,
the transmission signal (42) also being transmitted by a transmission means (32), and the transmission signal (42) being generated by means of two generation signals (44, 46) and having at least one measurement frequency (f₁, f₂) desired for acquiring an item of distance information,
**characterized in that** the generation signals (44, 46) are mixed by means of the transmission means (32) used as the mixing unit, and the mixing generates an evaluation signal (62), the evaluation signal (62) having an evaluation frequency (f_{A}) desired for evaluating the distance information, the generation signals (44, 46) having two frequencies (f₁, f₂) which differ from one another by the desired evaluation frequency (f_{A}).

8. Method according to Claim 7, **characterized in that**
the evaluation signal (62) is at least temporarily transmitted by the transmission means (32) and is received by a monitoring unit (38) for monitoring the transmission means (32).

9. Method according to Claim 7 or 8, **characterized in that** the evaluation signal (62) is passed to the transmission means (32) as a control signal for controlling the transmission means (32).

## Revendications

1. Appareil de mesure de distance comprenant une unité d'émission (20) destinée à générer un signal émis (42) réalisé sous la forme d'un rayon lumineux en vue de déterminer une distance à partir d'une comparaison de phases entre un rayon lumineux émis et un rayon lumineux réfléchi, reçu sous la forme d'un signal reçu (50) au moyen d'une unité de réception (28) depuis une surface d'un objet de mesure (24) distant,
le signal reçu (50) possédant par rapport au signal émis (42) dans son état généré un déphasage proportionnel au temps de propagation du rayon lumineux depuis sa génération jusqu'à sa réception,
possédant un moyen d'émission (32) destiné à émettre le signal émis (42), le signal émis (42) possédant au moins une fréquence de mesure (f₁, f₂) souhaitée pour une collecte d'une information de distance,
l'unité d'émission (20) comprenant un moyen (60) destiné à générer un signal d'interprétation (62), le signal d'interprétation (62) possédant une fréquence d'interprétation (f_{A}) souhaitée pour une interprétation de l'information de distance,
**caractérisé en ce que**
le moyen d'émission (32) est réalisé sous la forme de moyens (60) faisant office d'unité de mélange servant à mélanger des signaux de génération (44, 46) en vue de générer le signal émis (42), les signaux de génération (44, 46) possédant deux fréquences (f₁, f₂) qui présentent une différence mutuelle égale à la fréquence d'interprétation (f_{A}) souhaitée.

2. Appareil de mesure de distance selon la revendication 1, **caractérisé par** une unité de couplage de phase (72) qui est conçue pour coupler avec verrouillage de phase le signal d'interprétation (62) avec un signal de référence (74) par une régulation des signaux de génération (44, 46).

3. Appareil de mesure de distance selon l'une des revendications précédentes, **caractérisé en ce que** le signal d'interprétation (62) est un signal à basse fréquence.

4. Appareil de mesure de distance selon l'une des revendications précédentes, **caractérisé en ce que** l'unité d'émission (20) comprend un moyen d'émission (32) destiné à émettre le signal émis (42) et une unité de surveillance (38) destinée à contrôler le moyen d'émission (32), et l'unité de surveillance (38) est réalisée sous la forme d'une unité de réception destinée à recevoir le signal d'interprétation (62).

5. Appareil de mesure de distance selon l'une des revendications précédentes, **caractérisé en ce que** l'unité d'émission (20) possède un moyen d'émission (32) destiné à émettre le signal émis (42) et une unité de commande (34) destinée à commander le moyen d'émission (32), laquelle est conçue pour s'opposer à une émission du signal émis (42) à la fréquence d'interprétation (fA).

6. Appareil de mesure de distance selon la revendication 5, **caractérisé par** une liaison électrique (36) entre l'unité de commande (34) et le moyen d'émission (32), laquelle possède un point de collecte (68) servant à collecter le signal d'interprétation (62) .

7. Procédé de détermination d'une distance au moyen d'un signal émis (42) réalisé sous la forme d'un rayon lumineux à partir d'une comparaison de phases entre un rayon lumineux émis et un rayon lumineux réfléchi, reçu sous la forme d'un signal reçu (50) au moyen d'une unité de réception (28) depuis une surface d'un objet de mesure (24) distant,
le signal reçu (50) possédant par rapport au signal émis (42) dans son état généré un déphasage proportionnel au temps de propagation du rayon lumineux depuis sa génération jusqu'à sa réception,
le signal émis (42) étant en outre émis par un moyen d'émission (32) et le signal émis (42) étant généré au moyen de deux signaux de génération (44, 46) et possédant au moins une fréquence de mesure (f₁, f₂) souhaitée pour une collecte d'une information de distance,
**caractérisé en ce que** les signaux de génération (44, 46) sont mélangés par l'intermédiaire du moyen d'émission (32) servant d'unité de mélange et par le mélange d'un signal d'interprétation (62), le signal d'interprétation (62) possédant une fréquence d'interprétation (f_{A}) souhaitée pour l'interprétation de l'information de distance, les signaux de génération (44, 46) possédant deux fréquences (f₁, f₂) qui présentent une différence mutuelle égale à la fréquence d'interprétation (f_{A}) souhaitée.

8. Procédé selon la revendication 7, **caractérisé en ce que** le signal d'interprétation (62) est émis au moins temporairement par le moyen d'émission (32) et reçu par une unité de surveillance (38) destinée à contrôler le moyen d'émission (32).

9. Procédé selon la revendication 7 ou 8,
**caractérisé en ce que** le signal d'interprétation (62) est appliqué au moyen d'émission (32) sous la forme d'un signal de commande destiné à commander le moyen d'émission (32).
